# EUROPEAN PATENT APPLICATION

(11) **EP 4 616 927 A1**
(43) Date of publication of application: **17.09.2025**
(21) Application number: 24163778.4
(22) Date of filing: 15.03.2024
(51) Int. Cl.: B01D 53/26, B60T 17/00

(54) **HOUSING COMPONENT AND MANUFACTURING METHOD**

(71) Applicant: KNORR-BREMSE Systeme für Nutzfahrzeuge GmbH, 80809 München (DE)
(72) Inventor: BERCZY, Gergely, 6000 Kecskemet (HU); SZABO, Endre, 6000 Kecskemét (HU); NAGY, Robert, 6033 Városföld (HU); FARKAS, Szilveszter, 6000 Kecskemét (HU)

(57) **Abstract**

The present invention refers to a housing component (100), in particular for a housing of an air treatment cartridge, comprising a first housing element (110), at least one interface element (120) and at least one fixation means (130), wherein the connection part (122) comprises a connection surface (124) which faces the first housing element (110) in the assembled state of the housing component (100), and wherein the fixation means (130) extends along the circumferential direction of the connection part (122) and over at least a partial area of the connection surface (124). Further, the present invention refers to a housing, an air treatment cartridge and a manufacturing method of the same.

## Description

The present invention refers to a housing component, in particular for a housing of an air treatment cartridge, a housing, an air treatment cartridge and a manufacturing method for the same.

According to usual techniques, housing components of e.g. cartridges, like air treatment cartridges for utility and/or railway vehicles, are provided with an interface element being spot welded to an element of the housing. Thereby, the interface element is usually configured to allow assembly and/or disassembly of the respective housing element within the overall cartridge system, e.g. for the purpose of manufacturing, maintenance and the like.

However, at and around such welding point(s) along the housing the material of the housing element can crack easily, especially at high pressure cartridges which may cause a high leakage of the system. Among others, this is particularly due to the circumstance that the material structure of the housing component is changed, i.e. becomes harder and/or more brittle, during the point welding process.

Moreover, the respective welding point(s) also provide(s) for an only very limited material area to transfer mechanical loads during the assembling and/or disassembling process, thus exerting the material of the housing element to higher and even excessive peak loads.

It is an object of the invention to provide a housing component which represents a cost efficient, easy to handle and easy to arrange approach and further allows for a stable and reliable use of the housing component during its runtime as well as during the assembly and/or disassembly of such housing component. Further, it is an object of the invention to provide a housing, an air treatment cartridge and a manufacturing method for providing the same.

These objectives are resolved by a housing component according to independent claim 1, concerning a housing by independent claim 9, concerning an air treatment cartridge by independent claim 10 and concerning a manufacturing method by independent claim 11. Preferred embodiments are addressed by the dependent claims respectively.

According to the present invention a housing component is provided, in particular for a housing of an air treatment cartridge, comprising a first housing element, at least one interface element and at least one fixation means, wherein the interface element comprises a connection part for fixation of the interface element to the first housing element by the fixation means, wherein the connection part comprises a connection surface which faces the first housing element in the assembled state of the housing component. The fixation means extends along the circumferential direction of the connection part and over at least a partial area of the connection surface.

The present invention is based on the idea to provide a housing component with an interface means being fixed/attached/connected to the first housing element by the fixation means in order to allow for an easier, more cost-efficient manufacturing process as well as to avoid the occurrence of cracks and leakages due to mechanical loads and/or pressures.

In particular, by such fixation means, a.o. extending in circumferential direction of the interface element, an improved load distribution and extended fatigue limits can be achieved as well as an improved sealing against fluids, e.g. water or air, can be provided.

In comparison to previous pointwise load distributions along single welding spots, mechanical loads can be distributed along larger surface areas in order to avoid cracks in the first housing element's material. Thus, by the fixations means a negative effect on the material structure of the first housing element can be avoided during assembly/installation/manufacturing of the housing component.

In more detail, the at least one interface element is preferably configured to provide an interface for engagement to allow assembly and/or disassembly of the first housing element with a second housing element, in particular to allow the first housing element to be connected with and/or disconnected from the second housing element of a housing for e.g. an air treatment cartridge.

Preferably, the interface element can be configured for engagement with a working tool in order to allow a user of the housing component for suitable assembly of the housing of e.g. an air treatment cartridge, namely of the first housing element with a second housing element by making use of and engaging with the fixed/connected interface element.

Moreover, the fixation means preferably provides a form-fit and/or a force-fit fixation/connection of the interface element to the first housing element. Thus, the fixation means can be considered as an intermediate connector which allows for bonding/connecting the interface element and the first housing element together.

The fixation means is considered to be provided along the circumferential direction of the interface element, namely along the whole circumferential extension of the interface element. Thus, the fixation means extends in form of and can be described as a closed-loop fixation means, in particular with respect to a longitudinal axis of the housing component around which the fixation means can be provided.

Moreover, the fixation means extends over at least a partial area of the connection surface. Thus, the present invention does not necessarily require that the complete connection surface of interface element is used for/by the fixation means. In particular, the fixation means does not necessarily extend all over a width direction of the connection surface.

According to one preferred embodiment the fixation means extends along a substantial part of the connection surface of the connecting part, preferably along the whole connection surface.

Thus, by using a large area of the connection surface, in particular close to the complete or even the complete area of the connection surface of the interface element for interaction with the fixation means, a fixation/connection between the interface means and the first housing element can be strengthened to an overall available maximum in relation to the respective elements of the housing component.

Pursuant to another preferred embodiment, the fixation means is an adhesive material, in particular a single component or multi-component adhesive material, providing a form-fit and/or force-fit connection between the first housing element and the interface element.

In particular, the fixation means can provide a connection between the interface element and the first housing element which is more likely to break under mechanical loads than the first housing element's material. Thus, in the context of the present invention the fixation means can be considered to provide a destructive/destructible connection/fixation between the interface element and the first housing element.

By providing the fixation means is form of an adhesive material an easy to assemble/manufacture housing component can be provided. Moreover, there is no need to exert the first housing component to excessive temperatures or the like which may cause a change of the material's structure. Thus, the risk of the first housing element to crack open or to create any leakages along the first housing element can be reduced or even eliminated.

According to one further embodiment, the fixation means is provided in form of a solid material, preferably in form of a circular, star-shaped or ring-shaped layer, or in form of a fluid, in particular in form of a gel or the like.

In more detail, the fixation means can be provided as a fluid or fluid-like substance, e.g. fluid adhesive, or in form of a solidified layer of e.g. an adhesive material. This allows for a flexible, individual and precise setup during the manufacturing and relative placement of the interface means with respect to the first housing element.

The fixation means allows for an easy arrangement and handling during assembling/manufacturing of the housing component according to the present invention.

In another preferred embodiment the interface element further comprises an engagement part being configured for form-fit and/or force-fit engagement with a working tool in order to allow assembly and/or disassembly of the first housing element, preferably with a second housing element, a socket of a compressor system or the like, in particular for providing a housing of an air treatment cartridge.

Thus, the engagement part of the interface element allows the user of the housing component to use regular working tools in order to handle the housing component for connection with and/or disconnection from a second housing element of e.g. an air treatment cartridge. In particular, no specific tools are necessary to make use and allow the handling of the housing component according to the present invention.

According to another embodiment, the engagement part of the interface element comprises a circumferential shape, preferably a hexagonal circumferential shape, and/or an engagement means being configured for press-fit and/or form-fit engagement with a working tool, preferably a spanner tool, a screwdriver tool or the like.

Thus, the interface element can be provided in different configurations which may ease the engagement with and the entering of the engagement means depending on the installation situation of the housing component during its intended use, e.g. during the intended use of a corresponding cartridge within a utility or railway vehicle.

Even in narrow installation spaces the present invention allows for an advantageous engagement by a user for appropriate handling during the intended use of the housing component.

Pursuant to one preferred embodiment, the connection part is provided in form of a skirt of the interface element and/or the connection part surrounds the engagement part, in particular along a partial extension of the engagement part in direction of a longitudinal axis of the interface element, and/or the engagement part and the connection part form respective areas along a longitudinal and/or circular extension of the interface element.

Especially the connection part of in the interface element can be provided in individual and different forms in order to allow for an appropriate and sufficient setup of the housing component with respect to its intended use and the installation situation in e.g. a utility or railway vehicle.

Moreover, by e.g. providing the connection part with the connection surface in form of a skirt surrounding the engagement part, a simplified arrangement and fixation of the interface element along the first housing element can be provided.

Nevertheless, according to the geometry and configuration of the first housing element and the resulting housing component, for e.g. a specific cartridge setup, the connection part can be provided in different forms and configurations with respect to engagement part, e.g. along an outer or inner circumference of the engagement part and/or along a certain part of a longitudinal extension of the engagement part.

Thus, the present invention allows for various different and individual configurations of the interface means in order to provide for an advantageous housing component.

In one preferred embodiment, the interface element is provided at an upper/top end of the first housing element.

In particular, the first housing element can provide an upper and/or top end with respect to its installation situation during its intended use, preferably the intended use of a corresponding cartridge.

By providing the interface element at an upper and/or top end of the first housing element, the user shall be provided with an easy access for handling the housing component, namely for installation and connection of the housing component with a second housing component of e.g. a cartridge, via engagement with the interface means by a working tool or the like.

According to another aspect of the invention a housing for a cartridge, in particular for an air treatment cartridge, is provided, the housing comprising a housing component according to the present invention. Another aspect of the present invention refers to an air treatment cartridge, in particular for a utility vehicle and/or a railway vehicle, comprising a housing component or a housing according to the present invention.

In particular, by providing a housing for a cartridge and/or an air treatment cartridge with a housing component according to the present invention, the respective runtime handling as well as the manufacturing can be simplified as well as a more stable and reliable housing can be provided.

Pursuant to another aspect of the present invention, a manufacturing method for a housing component, a housing for a cartridge and/or an air treatment cartridge according to the present invention is provided, the manufacturing method comprising the following steps:
- providing the first housing element;
- providing the interface element;
- providing the fixation means on the first housing element and/or on the interface element, and
- connecting the interface element to the first housing element via the fixation means.

In particular, the connecting/fixation of the interface element to/with the first housing element can preferably be achieved by pressurizing/compressing the fixation means in between the interface element and the first housing element, at least by bringing such elements and means in contact with each other.

Thus, a very simply and advantageous manufacturing method can be provided which is also harmless to the housing component's material, namely does not exert excessive temperatures or mechanical loads to the first housing element. In consequence, cracks and/or leakages along the first housing element can be avoided during the manufacturing itself as well as in the course of the runtime for the intended use.

According to one preferred embodiment, the fixation means is provided along the circumferential direction of the connection part of the interface element and over at least a partial area of the connection surface.

Thus, the present invention allows for a very easy way of manufacturing and assembling the housing component for a housing of a cartridge or even an air treatment cartridge, being suitable for the use in a utility/railway vehicle.

All of the advantages and technical effects being described in the context of the housing component can also be applied for, individually or commonly, the housing, the air treatment cartridge and/or the manufacturing method according to the present invention.

Further details and advantages of the present invention are explained and described in more detail in the context of the embodiment as illustrated by the enclosed figures.

It is schematically shown:
- Fig. 1: three-dimensional illustration of an embodiment of the housing component; and
- Fig. 2: exploded view of the embodiment pursuant to Fig. 1.

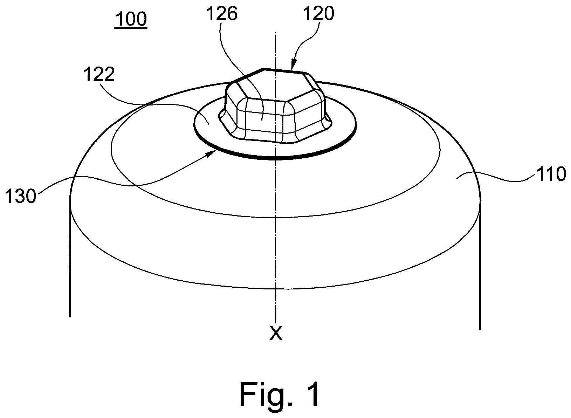

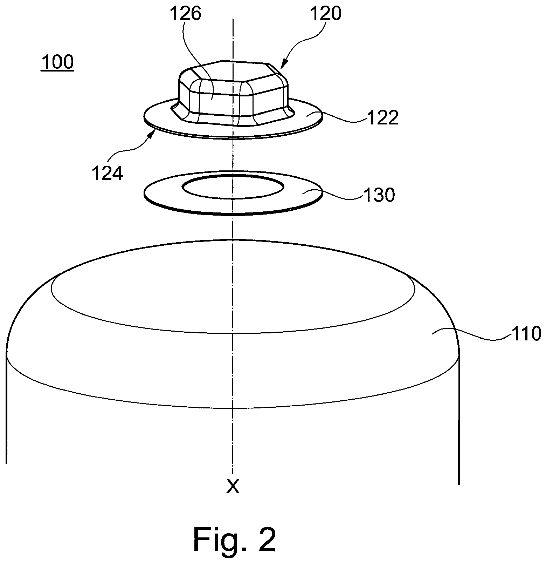

In Fig. 1 an embodiment of the housing component 100 is shown in a three-dimensional, perspective illustration. Moreover, Fig. 2 shows and exploded view, and thus a more detailed illustration, of such embodiment pursuant to Fig. 1.

According to such embodiment, the housing component 100 comprises a first housing element 110 and an interface element 120.

The first housing element 110 can comprise a cylindrical shape extending in direction of a longitudinal axis X.

According to Fig. 1, such longitudinal axis X can form a central, in particular rotational and/or symmetrical, axis of the first housing component 110.

The interface element 120 is provided on a top/upper surface of the first housing element 110. Thus, in the sense of the present invention it is considered that Fig. 1 and 2 illustrate the orientation of the first housing element 110 during its intended use. Alternatively, the term upper/top surface may refer to the respective end of the first housing element 110 irrespective of the specific spatial orientation during the intended use.

The interface element 120 can be arranged along the longitudinal axis X of the first housing element 110, in particular to allow for initiating a rotational movement of the first housing element 110 by engagement with interface element 120.

The interface element 120 can comprise a connection part 122 and an engagement part 126.

The engagement part 126 can comprise an outer shape, i.e. a circumferential shape, which allows for engagement with a working tool, e.g. a spanner or the like. Alternatively, the engagement part 126 can also comprise an engagement means for engagement by a working tool like e.g. a screwdriver.

In particular, the engagement part 126 can comprise a hexagonal outer/circumferential shape pursuant to the embodiment of Fig. 1 and 2.

Moreover, according to Fig. 1 and 2 the connection part 122 can be provided in form of a skirt of the interface element 120.

The connection part 122 can be considered as surrounding a lower end/bottom of the engagement part 126.

Alternatively, depending on the specific configuration of the first housing element and the engagement part 126, the connection part 122 can also be provided at and along a particular height of the engagement part 126 and/or on the inner or outer circumference of the engagement part 126.

in the assembled state of the housing component 100, the connection part 122 of the interface element 120 comprises a connection surface 124 which faces and is directed to the first housing element 110.

As an alternative to the embodiment of Fig. 1 and 2, the connection part can be formed with the same geometry as the engagement part, thus the engagement part 126 and the connection part 122 representing areas along the interface element 120 with a homogenous structure and outer shape. In this context, the connection surface 124 could be considered as being congruent with the geometry of the engagement part 126, the connection surface 124 hereby facing the first housing element 110 in the assembled state of the housing component 100.

In between the first housing element 110 and the interface element 120, a fixation means 130 is arranged.

In particular, the fixation means 130 extends along the circumferential direction of the interface element 120, preferably of the connection part 122 and at least over a part of the connection surface 124.

According to Fig. 2, the fixations means 130 can be provided in form of a circular or ring-shape, thus providing a connection and fixation all along the circumference of the connection part 122 of interface element 120.

The fixation means 130 can further extend over a part of the connection surface 124, in particular in width direction, or all over the connection surface 124 of the interface element 120, i.e. the connection part 122.

Preferably, the fixation 130 means can be an adhesive material.

In particular, pursuant to Fig. 2 the fixation means 130 can preferably be provided as a solid/solidified material, e.g. as a solid/solidified adhesive material. Alternatively, the fixation means 130 can be provided in the condition of a fluid-like substance, e.g. an adhesive gel or the like. This allows for an individual setup of the housing component 110 in order to simply the manufacturing process.

Especially from Fig. 2, a manufacturing method of such housing component 100, a corresponding housing and/or an air treatment cartridge according to the present invention becomes clear.

In more detail, the fixation means 130 can be provided on the interface element 120 and/or on the first housing element 110 in order to prepare the connection/fixation of such elements.

The connection and/or fixation of the first housing element 110 and the interface element 120 can be established by exerting a mechanical load via both elements on the fixation means 130 or by just bringing both elements 110; 120 and the fixation means 130 in contact with each other.

By this, a form-fit and/or force-fit connection between the first housing element 110 and the interface element 120 can be established via the fixation means 130.

In summary, by the present invention a housing component 100, in particular for an air treatment cartridge, can be provided which allows for an easier and more cost-efficient manufacturing and maintenance as well as the housing component avoids any cracking and/or leakage along the housing material. Thus, also an improved sealing against fluids can be provided.

In particular, by avoiding any material changes due to manufacturing processes, e.g. by point welding or the like, the housing component can maintain its initial material strength and condition.

Thus, even in case of exerting the housing component to high internal pressures during intended use case scenarios, e.g. in case of high-pressure air treatment cartridges, the housing component can provide an improved reliability during its runtime.

### REFERENCE SIGNS

- 100: Housing component
- 110: First housing element
- 120: Interface element
- 122: Connection part
- 124: Connection surface
- 126: Engagement part
- 130: Fixation means
- X: Axis

## Claims

1. Housing component (100), in particular for a housing of an air treatment cartridge, comprising a first housing element (110), at least one interface element (120) and at least one fixation means (130),
wherein the interface element (120) comprises a connection part (122) for fixation of the interface element (120) to the first housing element (110) by the fixation means (130),
wherein the connection part (122) comprises a connection surface (124) which faces the first housing element (110) in the assembled state of the housing component (100), and
wherein the fixation means (130) extends along the circumferential direction of the connection part (122) and over at least a partial area of the connection surface (124).

2. Housing component (100) according to claim 1,
**characterized in that**
the fixation means (130) extends along a substantial part of the connection surface (124) of the connecting part (122), preferably along the whole connection surface (124).

3. Housing component (100) according to one of the preceding claims,
**characterized in that**
the fixation means (130) is an adhesive material, in particular a single component or multi-component adhesive material, providing a form-fit and/or force-fit connection between the first housing element (110) and the interface element (120).

4. Housing component (100) according to one of the preceding claims,
**characterized in that**
the fixation means is provided in form of a solid material, preferably in form of a circular, star-shaped or ring-shaped layer, or in form of a fluid, in particular in form of a gel or the like.

5. Housing component (100) according to one of the preceding claims,
**characterized in that**
the interface element (120) further comprises an engagement part (126) being configured for form-fit and/or force-fit engagement with a working tool in order to allow assembly and/or disassembly of the first housing element (110), preferably with a second housing element, a socket of a compressor system or the like, in particular for providing a housing of an air treatment cartridge.

6. Housing component (100) according to claim 5,
**characterized in that**
the engagement part (126) of the interface element (120) comprises a circumferential shape, preferably a hexagonal circumferential shape, and/or an engagement means being configured for press-fit and/or form-fit engagement with a working tool, preferably a spanner tool, a screwdriver tool or the like.

7. Housing component (100) according to one of the preceding claims, in particular according to claim 5 or 6,
**characterized in that**
the connection part (122) is provided in form of a skirt of the interface element (120) and/or
the connection part (122) surrounds the engagement part (126), in particular along a partial extension of the engagement part (126) in direction of a longitudinal axis (X) of the interface element (120), and/or
the engagement part (126) and the connection part (122) form respective areas along a longitudinal and/or circular extension of the interface element (120).

8. Housing component (100) according to one of the preceding claims,
**characterized in that**
the interface element (120) is provided at a top end of the first housing element (110).

9. Housing for a cartridge, in particular for an air treatment cartridge, comprising a housing component (100) according to one of the preceding claims.

10. Air treatment cartridge, in particular for a utility vehicle and/or a railway vehicle, comprising a housing component (100) or a housing according to one of the preceding claims.

11. Manufacturing method for a housing component (100), a housing for a cartridge and/or an air treatment cartridge according to one of the preceding claims, comprising the following steps:
- providing the first housing element (110);
- providing the interface element (120);
- providing the fixation means (130) on the first housing element (110) and/or on the interface element (120), and
- connecting the interface element (120) to the first housing element (110) via the fixation means (130).

12. Manufacturing method according to claim 10,
**characterized in that**
the fixation means (130) is provided along the circumferential direction of the connection part (122) of the interface element (120) and over at least a partial area of the connection surface (124).
